# EUROPEAN PATENT APPLICATION

(11) **EP 4 841 546 A1**
(43) Date of publication of application: **18.11.2026**
(21) Application number: 25738944.5
(22) Date of filing: 07.01.2025
(51) Int. Cl.: G06Q 30/0601, G06F 21/31

(54) **RELATION AUTHENTICATION DEVICE AND SYSTEM**

(30) Priority: 10.01.2024 JP 2024018995; 26.03.2024 JP 2024065787
(71) Applicant: TSUYUKI, Toshio, Ashigarashimo-gun, Kanagawa 259-0313 (JP)
(72) Inventor: TSUYUKI, Toshio, Ashigarashimo-gun, Kanagawa 259-0313 (JP)
(74) Representative: Kuhnen & Wacker Patent- und Rechtsanwaltsbüro PartG mbB
(86) International application number: PCT/JP2025/080004
(87) International publication number: WO 2025/150577

(57) **Abstract**

In both human science and natural science, it is the that events are generally described in terms of an "entity" and a "relationship." It can be understood that the same applies to an authentication system which is the theme of the present invention. In an existing "personal authentication system," an "entity" such as an individual, a company, or a government agency is to be authenticated. In the present invention, a "relationship," instead of the "entity," is to be authenticated. This approach significantly enhances security, reduces costs, and simplifies procedures. While "identity authentication systems" focus on the "individual" and do not extend to "counterparties," the "relationship authentication" includes a "counterparty" in the authentication, thereby contributing to improved security.

## Description

### Technical Field

The present invention, which differs in principle from existing techniques, relates to an authentication device and system that are simple and offer a high level of security.

### Background Art

The underlying technique is identity authentication, which serves to verify the legitimacy of entities (elements) such as individuals or enterprises. Identity authentication such as using passwords and their improved successors, passkeys, impose a significant burden on users and high costs on service providers, while also facing limitations regarding their application to IoT.

### Prior Art Documents

The present invention differs in principle from existing techniques (identity authentication), so there is no prior art against which the present invention can be compared, nor are there any comparable prior art documents.

### Summary of the Invention

### Problems to be solved by the Invention

The problems to be solved include simplifying authentication procedures, which are complex in the prior art, and addressing security concerns.

### Means for solving the Problems

The primary feature of the present invention is that authentication is performed based on the legitimacy of an ongoing relationship.

### Advantageous Effect of the Invention

The authentication system of the present invention offers the advantages of simplifying user procedures, reducing costs, and enhancing security levels. It is also applicable to the Internet of Things (IoT), a field in which existing authentication systems faced implementation limitations.

### Brief Description of the Drawings

FIG. 1 is an explanatory diagram illustrating an embodiment of a relation authentication device.

FIG. 2 is an explanatory diagram illustrating an embodiment of a relation authentication system according to the present invention.

### Embodiments for Carrying out the Invention

This has been achieved by configuring a verification unit or verification system that determines the legitimacy of maintaining a relationship, thereby ensuring the proper continuation of the wide variety of relationships that may be established.

### Embodiment 1

First, an overview of the present invention will be described. The present invention differs in principle from the background art (identity authentication) and introduces novel terminology and concepts, so a detailed explanation is provided below. All means, steps, systems, facilities, equipment, functions, and techniques described herein may be combined and configured in various ways according to each embodiment to properly implement the present invention. The described embodiments are combined and configured as appropriate to achieve the intended purpose and enhance the effects of the present invention.

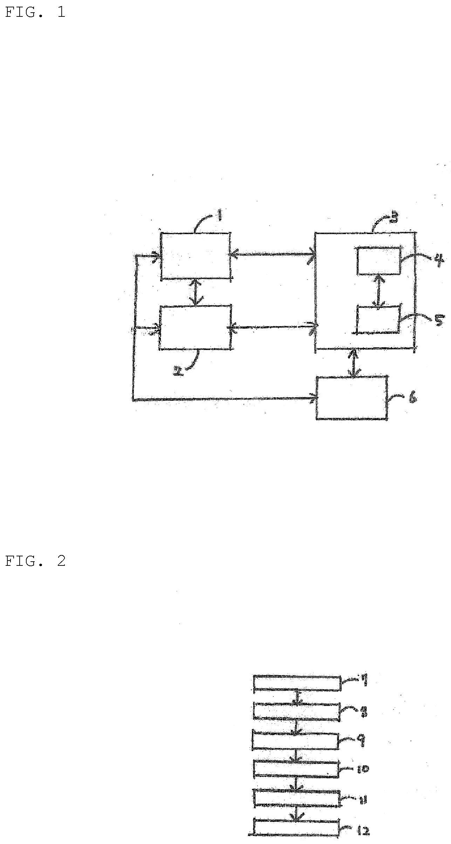

The terms used herein have meanings specific to the embodiments. For example, centers refer to facilities, base stations, systems, platforms, servers, or the like, and in some embodiments, they include cloud environments. FIG. 1 illustrates an embodiment of the device according to the present invention, in which 1 represents an entity a, 2 represents an entity b, 3 represents the center, 4 represents a storage unit, 5 represents a verification unit, and 6 represents an entity c. (Entities a, b, and c are not limited to users, and they encompass terminals used by the entities a, b, and c, as well as storage units, processing units, output/display units, etc. provided within such terminals, in accordance with the specifications of each embodiment.) FIG. 2 is an explanatory diagram illustrating a system according to the present invention. The system starts (7), an entity accesses the center (8), relation data is created (9), the relation data is stored in the storage unit (10), and when an entity newly accesses the center (11), the relation data is verified (12).

The terms "relation authentication device" and "relation authentication system" have broad meanings, and they refer to devices or systems equipped with predetermined functions, such as those inputting, outputting, processing, storing, transmitting/receiving, and controlling information and system functions. In terms of form, they generally include smartphones, personal computers, centers, servers, platforms, etc.

"Information" encompasses anything capable of being transmitted, including characters, symbols, numbers, audio, video, images, codes, and olfactory objects.

"Entities" are represented by single or multiple instances, such as individuals, users, groups, organizations, or systems. They include legal entities such as government agencies, local municipalities, or corporations, individuals, organizations, functions, home appliances, vehicles, transportation systems, and infrastructure such as electricity, gas, water supply, and essentially, they encompass anything that can be users of authentication device and system user, or a subject of authentication.

Verification units (including verification systems) established within centers or authentication units (including authentication systems) are also entities. Relationships are established between these entities, such as between a center and an individual user, and the system includes the means and steps to create relation data based on these relationships. IoT components are also broadly included as entities.

"Relationships" in society refer to all connections established between entities, including the buying, selling, or exchange of money and goods; the transmission and reception of various types of information; verification; contracts and reservations; and the communication or expression of intentions. They encompass all relationships that can be formed through information. Depending on the embodiments, these relationships may carry various meanings. In some instances, they include all events associated with the relationship. In such instances, the identifier encompasses the content of the event and any resulting phenomena. Events associated with the relationship are classified, and the relevant data is utilized by selecting specific categories based on the identifier.

In embodiments of the present invention, whether to proceed with a procedure to establish a relationship (relation) is determined by verifying the relation data (identifiers). Relationships encompass all procedures, processes, and transactions whether related to daily life, business, education, entertainment, or the like conducted between parties such as individuals, mail-order companies, service or information providers, banks, government agencies, hospitals, and travel agencies.

An "identifier" is an identifiable one composed of characters, symbols, numbers, audio, video, images, codes, olfactory objects, or the like. In the present invention, the "identifier" is described as "relation data." The relation data (identifier) is assigned to a specific relation (relationship) established between entities in order to identify that relationship. Anything capable of serving as an identifier may be used, provided that it allows for identification. Examples of such identifiers include numerical values representing time, or latitude and longitude coordinates indicating a specific location. There are no restrictions, so long as identification is possible. Even an object perceived through the sense of smell may be used, provided it can be identified by equipment, a person, or a living organism.

Means or systems for creating identifiers are provided in at least one of terminals, equipment, means, and systems for use, facilities of centers, cloud environments, and third-parties, processing units (including processing systems) configured in equipment, facilities, means, systems, etc. Alternatively, such means or systems may be configured to create identifiers through a combination of these components and include means or steps for storing the identifiers in the associated storage units or systems.

Means or steps for verifying relation data are provided within the processing units (processing units equipped with a verification function) or processing systems of the terminals, centers, authentication centers, third-party facilities, equipment, or systems being used.

An example will be described below. Entities a and b include a plurality of entities of various types. When the entity a establishes a relationship with the entity b, such as a relationship within the broad context of society involving politics, economics, culture, entertainment, daily life, education, business, or research (typically relationships arising from transmission and reception via the Internet), a center (including servers, cloud systems, etc.) includes means for creating an ID (an identifiable notation or various forms of data) to be assigned to the entities a and b for that relationship. While such relationships are often formed via the Internet, they encompass a wide variety of contexts, including mail-order sales transactions; reservations for travel, taxis, dining, concerts, etc.; bank transfers; cryptocurrency trading; email exchanges; contracts with individuals or corporations; the use of applications or services; and the control of home appliances, vehicles, hospital equipment, factories, or transportation infrastructure. There are no restrictions on the types of entities, provided that they are capable of establishing such relationships.

The present invention is implemented primarily via the Internet lines. (Hereinafter, the means is used to signify a "step," consistent with the concept of an embodiment.)

As an example, means (step) is provided for the entity a to access a center, upon such access, the center includes means (step) to create an ID for the entity a, includes means (step) to create the ID of the center, and further includes means (step) to record the time at any given moment during the execution of the relationship. In some instances, the recorded value is not a timestamp but rather a numerical value representing positional data or another arbitrary value. In other instances, it may be an identifiable image, code, or cryptographic string. Means (step) is provided to store, in a storage unit, data composed and created from the record and the IDs of the entity a and center, serving as verification data (relation data) pertaining to the relationship between the entity a and the center.

A general embodiment of the present invention will be described below. The invention realizes a relation authentication device, which differs in principle from identity authentication, comprising: means for creating, when a relationship arises between an entity A and an entity B, an identifier that distinguishes the relationship from other relationships; and means for storing the identifier in a storage unit. Conventional identity authentication has relied on passwords or biological data such as fingerprints or iris scans. These schemes have imposed a burden on users (entities) as they require initial setup and registration. Both individuals and enterprises bore the risks and costs associated with configuring and managing authentication data such as passwords and fingerprints. Furthermore, security concerns have been prevalent, leading to the acceptance of concepts such as Zero Trust. According to an embodiment of the present invention, the identifier is created by an authentication device, and attribute data such as the user's (or entity's) name, address, rating, track record, and preferences is managed separately from the identifier itself. Since the identifier is transmitted over the Internet only for limited periods, the risk of theft is reduced.

There are instances in which the identifier is created by a processing unit of the center, as well as instances in which the task of creating the identifier is shared between the center and the entity. For example, the processing unit of the center issues a creation instruction to the processing unit of the terminal used by the entity. In embodiments in which the terminals used by the entities A and B create identifiers upon receiving such an instruction, the timestamps may not match and could potentially diverge. In light of this, rather than requiring a match as a determination in verification, it is preferred to include means (step) wherein the processing units of the terminals used by the entities A and B acknowledge the discrepancy and determine the data to be valid despite the lack of a match. Such a determination need not be limited to the processing units of the terminals used by the entities A and B. In some instances, the determination is performed by the processing unit of the center or an authentication unit. This represents one example of satisfying the prescribed requirements set forth herein. The system is configured to recognize divergent timestamps as valid. Some embodiments encompass all events associated with the relationships described in the present invention. It is desirable to include means for organizing and classifying the contents of these events to serve as material for evaluation or as subjects for statistical analysis.

### Embodiment 2

A novel relation authentication device is realized by comprising: means for verifying the identifier stored in the storage unit for each of the entity A and the entity B; means for determining, based on the verification, whether or not the identifier satisfies a predetermined requirement; and means for approving continuation of a procedure to establish a relationship between the entity A and the entity B when it is determined that the requirement is satisfied. In one example, the verification of identifiers is executed by the processing means of a verification unit provided within the device. There are various configurations for transmitting the identifiers to the verification unit's processing means, as described in other embodiments. These include embodiments in which a process is set up or in which means such as search instructions or transmission instructions to the storage unit are provided. As described herein, the management and forms of the identifiers vary, incorporating diverse features such as coordination with authentication units or dedicated terminals, and measures against unauthorized intervention. Risk is also mitigated through defenses such as the use of lists of entities to be kept confidential.

Generally, the identifiers are composed of IDs assigned to the entity A and entity B, the timestamp recorded at the time the relationship has been established, etc. There are embodiments in which the center sets the ID and timestamp, and examples in which the entity A or entity B performs part of this process. There are also embodiments in which the entity A and entity B are not involved at all and are unaware of their own IDs.

Identifiers may be updated each time a relationship arises, or updated randomly, at set timings, or at arbitrary opportunities.

They can be applied as appropriate to various fields such as IoT, critical infrastructure, and crypto-asset transactions in which risk levels and security standards differ.

### Embodiment 3

This is a relation authentication system that differs in principle from existing identity authentication systems. A novel relation authentication system is implemented by executing a method comprising: a step 1 of creating, when a relationship arises between an entity A and an entity B, an identifier that distinguishes the relationship from other relationships; and a step 2 of storing the identifier in a storage unit. Various embodiments are presented regarding aspects such as the creation of identifiers and methods for storing them.

### Embodiment 4

A novel relation authentication system is implemented by executing a method comprising: a step 3 of verifying the identifier stored in the storage unit for each of the entity A and the entity B; a step 4 of determining, based on the verification, whether or not the identifier satisfies a predetermined requirement; and a step 5 of approving continuation of a procedure to establish a relationship between the entity A and the entity B when it is determined that the requirement is satisfied. The requirements to be satisfied are arbitrary, examples of which include the use of encryption, or conversion into shapes or images to determine consistency.

One embodiment includes means (in system embodiments, means may have the same meaning as a step) for storing the relation data in the storage units of both the center and the terminal of the entity a. When the entity a requests a relationship with the center on a subsequent occasion (a step of accessing the center), the system includes means (step) for the center to retrieve the relation data from its own storage unit, and means (step) to notify the processing unit of the entity a's terminal with an instruction to transmit the data to the center's processing unit (or the verification unit of the authentication unit, etc.). The verification unit of the center (or the verification unit of the authentication unit) includes means (step) for verifying the relation data. Upon determining (step) through this verification that the relation data match (or satisfy prescribed requirements), the system includes means (step) for approving the new request from the entity a, and when the center approves (step) the request from the entity a, the system includes means (step) for the entity a and the center to execute the procedure via predetermined communication means.

Furthermore, as an example, when the entity a requests the establishment of a relationship with the entity b via the center and submits an application to the center (step), the center includes means (step) for retrieving data regarding the previous relationship between the entity a and the entity b from the storage unit of the terminal of the entity a and notifying a transmission instruction to the processing unit of the entity a so as to transmit it to the verification unit, and similarly the center includes means (step) for retrieving data regarding the previous relationship between the entity a and the entity b from the storage unit of the terminal of the entity b and notifying a transmission instruction to the processing unit of the terminal of the entity b so as to transmit it to the verification unit. The verification unit of the center or the verification unit of the authentication unit includes means for verifying the relation data. It also includes means (step) for determining whether or not the relation data matches (or satisfies prescribed requirements) based on the verification. Upon determining a match (or satisfaction of requirements), means (step) is provided for the center's processing unit to approve the progression of procedures to establish a new relationship between the entity a and the entity b. The entity a and the entity b include means for executing the procedures via prescribed communication means. When establishing a relationship using the Internet, if it is the first instance, meaning there is no prior relationship history, there may or may not be a list of potential counterparties available. If the entities (users) are managed by the center, the center includes means for creating a list maintained by the center.

In cases in which no such list exists, such as when the entity b, which receives the relationship application, is a government agency, local municipality, corporation, or store, and may anticipate applications from unspecified entities a, the center includes means (step) for approving the establishment of the relationship, and the center implementing the present invention and the entity a proceed in accordance with the determination of the entity b.

Once the center has approved the progression of procedures and the transmission/reception of data for establishing the relationship, the entity a and the entity b use prescribed communication means to confirm, agree upon, and acknowledge the conditions and contents of the relationship, thereby validly establishing the relationship between the entity a and the entity b. As one example, the time at which the center approves the progression of procedures or the transmission/reception required to establish a relationship is recorded, and the relation data is created based on that time.

In some examples in which either the entity a or b receives a request for a relationship, the relationship is limited to the counterparty and content approved by the user, and the relationship is established only upon mutual confirmation and agreement.

### Embodiment 5

The detection of abnormal processing for the relation data will be described. Relation data processing is diverse, and there are no restrictions on combinations of embodiments, resulting in numerous processing examples. (In this specification, means may also signify a step.)

Some embodiments include: means for establishing a prescribed process for the sequence of operations, ranging from identifier creation, storage in a memory unit, and retrieval or transmission to a processing unit to other processing and verification, as well as means (step) for detecting that the processing has followed the process; means (step) for assigning a signature, stamp, or ID to the identifier to certify that it has followed the process; means (step) for detecting a different process (abnormal processing) when processing deviates from the prescribed process; and means (step) for withholding approval for the progression of procedures to establish a new relationship upon such detection.

One example will be described. It is an example in which the relation data (identifier) is forged and used fraudulently. Forged relation data is highly likely to be transmitted to the verification unit without having undergone the prescribed process. In one example, the relation data is forged or misappropriated and transmitted to the verification unit without being retrieved from the memory unit. Since the stamp, signature, or ID indicating retrieval from the memory unit is absent, the processing unit includes means (step) for determining that the processing differs from the prescribed process and means (step) for withholding approval for the progression of procedures to establish the relationship.

Alternatively, in an example in which the relation data is fraudulently retrieved from the storage unit, the processing unit includes means for determining that the processing differs from the prescribed process, due to the absence of a stamp, signature, or ID indicating that the prerequisites or conditions for retrieval, such as a transmission/delivery instruction from the center, have been met, and with means to withhold approval for the continuation of the procedure.

Alternatively, it includes: means (step) for intentionally establishing a process that is not strictly necessary; means (step) for recording the fact that such a process has been traversed; and means (step) for determining that a procedure constitutes unauthorized processing if it does not pass through the established, prescribed process. This embodiment is effective for critical or high-risk systems, in which it is desirable to establish multiple such processes.

Such processes may be modified randomly as appropriate. This will be described using the example of users X and Y. Such an example includes means (step) for storing the relation data in the storage units of terminals Xa and Xb used by a user X (and similarly, terminals Ya and Yb used by a user Y). In an example in which the processing unit of the center or authentication center (or, depending on the embodiment, the terminal Ya) includes means (step) for transmitting instructions to the processing units of Xa and Xb (with such instructions potentially accompanied by a signature or encryption, depending on the embodiment), the processing unit of the center or authentication center (or, depending on the embodiment, Xa or Ya) includes means (step) for determining abnormal processing if the relation data is retrieved from the storage unit in the absence of the instructions or signature.

When the processing units of Xa and Xb include means (step) for retrieving the relation data from their respective storage units, the processing unit of the center or authentication center (or, depending on the embodiment, Xa or Ya) includes means (step) for determining abnormal processing if the relation data is retrieved without the corresponding retrieval process (operation of the means) being performed by the processing units of Xa and Xb. Additionally, when specific steps, flows, means, or procedures are established for retrieving the relation data from the storage units of Xa, Ya, Xb, and Yb, it is desirable for the processing unit of the center or authentication center (or, depending on the embodiment, Xa or Ya) to include means (step) for determining abnormal processing if a retrieval is performed without the steps, flows, means, or procedures.

In an example including means (step) for storing the relation data in the storage unit of a center (including server, cloud, application operation center, etc.) or an authentication center, and means (step) for the processing unit of the center or authentication center (or Xa or Ya, depending on the embodiment) to transmit instructions to the processing unit of the center or authentication center, the processing unit of the center or authentication center (or Xa or Ya, depending on the embodiment) includes means (step) for determining abnormal processing if the relation data is retrieved from the storage unit in the absence of the instructions or signature. Additionally, when specific steps, flows, means, or procedures are established for retrieving the relation data from the storage unit, it is desirable for the processing unit of the center or authentication center (or Xa or Ya, depending on the embodiment) to include means (step) for determining abnormal processing if a retrieval is performed without the steps, flows, means, or procedures. Means (step) is provided to invalidate the detected relation data upon detection of the abnormal processing. There are also examples including means (step) for creating the relation data at that point in time. There are also examples including means (step) for newly creating the relation data using the creation means and storing it in the storage unit.

The abnormal processing differs from the procedures or sequences, such as steps, flows, or processes, set and configured in each embodiment, and means (step) is provided to infer that the situation likely involves unauthorized third-party intervention, in addition to potential system errors.

An example of the abnormal processing will be described. Retrieved relation data is transmitted from the storage unit and undergoes processing and verification by the processing unit, but in this process, the data is intended to undergo specific operations, such as designated processing, transmission/reception, and verification.

It includes means (step) for detecting situations such as the data being retrieved from the storage unit without passing through the transmission/reception unit, or the relation data failing to transfer to the verification "site" (verification unit) including the verification means, and it includes means (steps) for detecting, as abnormal processing, any processing that differs from the steps, flows, procedures, processes, or the like established and configured in any given embodiment.

In some examples, flows, procedures, or means are intentionally incorporated to facilitate the detection of abnormal processing. It is desirable to include detection means (step) for intentionally incorporating unnecessary processes for the purpose of detection, and detecting abnormal processing, such as when the data does not pass through such a process or fails to trigger the relevant detection means (i.e., the means designed to recognize the detection, confirmation, or passage of the relation data) (indicating the absence of the expected target).

The detection means can be implemented in various ways, and an example includes means for confirming the relation data (means for recognizing the detection, confirmation, or passage of the relation data) before or after any (or all) of the prescribed flows, processes, steps, means, or operations. In some examples, confirmation by the confirmation (such as the detection or recognition) means (step) signifies that normal processing has performed, while when the processing unit determines that the operation differs from normal processing (the processing including means to make such a determination), the processing unit includes means for invalidating the relation data. Some examples include means (step) for distributing newly created relation data to the storage unit of a terminal used by a party to the relation.

### Embodiment 6

There are also embodiments in which new relation data is not created and the legitimacy of continuing the relation is not approved. (In cases involving high-risk relations, the procedure may be interrupted, and actions such as investigating the parties to the relation may be executed.)

Abnormal processing refers to processing that differs from prescribed flows, steps, means, procedures, treatment, or processes, and the specific flows and processes vary depending on the embodiment and are set arbitrarily. The embodiment includes: means (step) for assigning a stamp (such as characters or symbols) to the relation data or the like each time a prescribed flow, step, means, procedure, or process is successfully executed; means (step) for confirming the presence or absence of the stamp; and means (step) for interrupting the procedure upon a determination that the stamp is missing. Another embodiment includes means (step) for canceling (invalidating) the relation data and means (step) for newly creating relation data at that point.

The specific manner of detecting abnormal processing is arbitrary, as is the response upon detection (such as whether or not to invalidate the relation data, create new relation data, or distribute the new relation data).

### Embodiment 7

In an example involving an initial relation, since the attributes and track record of the entity b which is the party to whom the relation request is made are unknown, the embodiment includes means (step) for the center, the processing unit of the terminal used by the entity a, or the processing unit to issue a warning to the user (entity a) who made the request. The embodiment also includes means (step) for the entity a to perform a confirmation, means (step) for the terminal of the entity a to notify the center upon such confirmation, and means (step) for the center to approve the establishment of the relation. Typically, the warning is presented via the output unit of the terminal in the form of images, text, or audio. Alternatively, in a case in which the entity a mistakenly requests a relation with the entity b with whom there is no prior relationship history, it is preferred to include means (step) for the entity a to execute a confirmation based on instructions from the center, or means (step) for the center to issue a warning to the terminal of the entity.

There are also embodiments in which the center includes means (step) for detecting abnormalities such as differences in type, content, or numerical values compared to the entity's usual relations, and includes means (step) for executing the above confirmation or means (step) for issuing warnings to the user's terminal, the other party to the relation, etc. The means (step) or schemes for detecting abnormalities in the content, quality, quantity, or monetary value of the relations are arbitrary. Statistical schemes are generally employed.

### Embodiment 8

In examples involving high-risk relation, some embodiments require the subject entity (user) to be located at a specific, designated point. For instance, such an embodiment include means (step) for designating a specific location for executing the relation, such as a location at which it is difficult for a third party to be present, or a highly secure area like the vicinity of a police station or the interior of a bank. It also includes means (step) for verifying the subject entity's or terminal's presence at the designated location, by including means (step) for confirming the terminal's latitude and longitude or its relationship to the designated location using any scheme such as Bluetooth, local radio waves, IC tags, or GPS, thereby enabling verification of the subject entity's actual location with the designated location. For example, it includes means (step) for confirming the actual location against a predetermined numerical value (positional coordinate value). It is desirable to include means (step) for determining whether or not the subject entity's location matches the designated location, and to approve the progression of the procedure upon such confirmation (of the location) performed by the terminal's own verification means (step). Using the present invention in conjunction with such means enhances crime prevention and safety.

### Embodiment 9

It is also desirable to use the present invention in conjunction with measures against malware and viruses. The embodiment includes means (step) for extracting the intent or content from Data 1 acquired via external reception using AI, and means (step) for the AI to newly create Data 2 based on the extracted intent or content. It further includes means (step) for transmitting the Data 2 to an internal system that is virtually isolated from the outside. It is preferred to include means (step) for transmitting Data 1 defined as the residual data remaining after the extraction of the intent and content not to the internal system, but to an analysis unit within a separate system isolated from the internal system, and this analysis unit should include means (step) for analyzing the data or culturing viruses, and, upon the recognition of malware or a virus, means (step) for identifying the sender of the Data 1 or taking appropriate countermeasures.

### Embodiment 10

The authentication device and system include: means (step) for recording, as a relationship history, relationships (whether successfully established or unsuccessfully attempted in the past between entities; and means (step) for storing the records in the storage unit (as described in the embodiments herein). These storage means or steps are executed by the center (interpreted broadly to include platforms, cloud environments, etc.), or processing units or systems or storage units or systems within the terminals used by the entities a and b. Alternatively, the data may be stored in the storage units or systems of dedicated terminals used in conjunction with the others. The specific means, systems, formats, or tools used to store the records are arbitrary. The embodiment includes means (step) for supplying the relationship history records to the terminals or systems of the entities (users), as well as means (step) for restoring the conditions or eligibility for establishing new relationships in the event of a malfunction or loss of the terminals used by the entities a and b." It also includes: means (step) for transmitting the relationship history to a counterpart entity or a center; means (step) for applying for a new relationship; means (step) for evaluating the relationship history as a past track record; and means (step) for facilitating the procedures for establishing a new relationship.

It is also desirable to include means (step) for storing a history of unsuccessful attempts in the storage units of the terminals used by the entities a and b or at a center, thereby enabling the use of this data for fraud prevention or evaluation purposes.

### Embodiment 11

In the authentication device and system, when an entity establishes a relationship with another entity, they include means (step) for presenting a list to the entity, displaying the names or IDs of other entities, allowing the entity to be specified (as the target of the relation). The list may use any notation that enables the utilizing entity to identify the items and specify the intended party for the request. The notation need only be in a form recognizable by the entity. It is desirable to use a notation that is unidentifiable by third parties to prevent unauthorized use. In some examples, the list is stored in the storage unit of the terminal used by the entity. In examples including: means (step) for retrieving the list from the terminal's storage unit or means (step) for transmitting the list from the center to the terminal; and means (step) for displaying the list on the terminal's output display unit, it is preferred to include means (step) for revealing the list based on input from the terminal's user (the entity), such as a fingerprint or PIN, and means (step) for keeping it concealed from third parties. In examples in which the list is stored in the center's storage unit, it is similarly preferred to include means (step) for revealing the list (via means (step) for transmission from the center to the terminal) based on the entity's fingerprint or PIN, and means (step) for withholding transmission of the list to the terminal if the revealing step is not executed. Concealing the list prevents third parties from fraudulently establishing relations; furthermore, by including means (step) for warning the entity and means (step) for requesting confirmation even when an attempt is made to establish a relation with a party lacking a legitimate relationship history, it is possible to prevent third parties from attempting to establish relations independently of the entity. In some examples, the list is stored in the storage unit of a dedicated terminal used in conjunction with the terminals used by the entities a and b. Also in such examples, it is preferred to provide a configuration including means (step) for revealing the list based on the entity's fingerprint or PIN, and means (step) for keeping it concealed.

### Embodiment 12

An example including such a list will be described. The embodiment includes means (step) for the center to create a list of entities. The embodiment includes means (step) for creating the list to include evaluations (such as track records) of the entities. The center includes means (step) for notifying the other party in a relation of the evaluation associated with a given entity. Evaluations are made based on factors such as the duration of trouble-free and fraud-free operation, as well as the track record and the number of histories of relations. Generally, the entities a and b desire to establish relations with parties that have high evaluations. The evaluation is higher if the period of trouble-free and fraud-free operation is long and the contents of relations are of high quality and large scale.

The center includes means (step) for transmitting a list to the terminal used by an entity, allowing the entity to view a list of other entities with whom they have an established track record. It is preferred to include means for transmitting the list in an unreadable (concealed) state. In this example, the receiving terminal includes means (step) for converting the list into a readable state. One example includes means (step) for the entity to enter a PIN or biometric data, or means (step) for inputting a cipher or code into the terminal. This embodiment enables the list to be kept confidential from third parties. This has the effect of reducing the risk that the terminal might be used to establish a relation with an unknown entity lacking a prior track record, thereby preventing unauthorized use of the terminal that could cause harm to the entity.

### Embodiment 13

In some examples, recording media such as USB memories, cloud storage, or written notes are used in conjunction with the list concealment method, and such media may also be used for recovery purposes (i.e., means for restoring the procedure in the event of terminal failure or loss). Regarding recovery, in addition to using the list, the embodiment may include means (step) for storing the relation data on a USB memory, in the cloud, in written notes, or via any other desired means, method, and by transmitting this relation data to the center, means (step) can be achieved for restoring the credentials within the relationship between the center and the entity.

The embodiment includes means (step) for the center to transmit specific relation data, at a time and in a manner of the center's determination, to the terminal or the like used by the entity, provided that the relation data enables the center to confirm the entity's relevant credentials. The entity includes means (step) for storing the relation data using a USB memory, cloud storage, a written note, or any other desired means (step). The embodiment includes means (step) for the entity to transmit the relation data to the center from any terminal during the recovery. The center includes means (step) for determining whether or not the received relation data is authentic. The embodiment includes means (step) for restoring the entity's credentials upon determining that the data is authentic. It also includes means (step) for transmitting the list to the terminal used by the entity whose credentials have been restored.

### Embodiment 14

When the procedure for establishing a relation between the entity a (which requests the relation) and the entity b (which receives the request) is approved by the center, the entities a and b include means (step) for transmitting and receiving data via any communication means (including examples in which the center intervenes and cases in which it does not). Upon the valid and trouble-free establishment of the relation between the entities a and b, the center includes means (step) for assigning new relation data to the entities a and b. There are various forms regarding the assignment means (step) and the targets of assignment. The embodiment includes: an example in which they are the terminals of the entities a and b, equipment and facility devices, and the storage and processing units provided therein; an example in which they are the center's equipment and facility devices, and the storage and processing units provided therein; an example in which they are the system's storage and processing units; an example in which they are the equipment and facility devices of an authentication unit specializing in authentication, and the storage and processing units provided therein; an example in which they are cloud-based storage and processing units; and an example in which, in addition to the terminals of the elements a and b, dedicated terminals used by the elements a and b as well as the storage and processing units provided therein are designated as targets for the assignment.

### Embodiment 15

The relation data is composed of characters, symbols, numbers, audio, video, images, codes, olfactory objects, etc., and the specific identification material used is arbitrary, provided that it offers distinctiveness and allows for identification. The means (step) and schemes in the identification, and whether the subjects are humans, animals, or devices, may also be selected arbitrarily. Typically, the relation data is composed of characters, symbols, and numbers. The embodiment includes means (step) for creating the relation data by combining: the time at which the relation has been validly established between the entities a and b (note that multiple entities are possible, the number of entities is arbitrary, and in a relation between the center and an entity, there may be only a single entity); the X and Y coordinate values (latitude and longitude) representing the location of at least one of the entities a or b; and the ID assigned to the entity by the center. The center also includes means (step) for creating this relation data. The entity creating the relation data is not limited to the center, and there are also examples in which the creator is the entity a or b, or a facility or system dedicated to creating the relation data, and the system includes the means (step) for such creation.

### Embodiment 16

Another embodiment will be described. The center includes means (step) for instructing the terminals of the entities a and b as well as the processing units within associated systems, facilities, equipment, and authentication units to record a common, identical time at the moment the relation is established. (A time common to all regions of the Earth, disregarding time zone differences, is desirable. In this example, the center includes means and functions to independently manage a time that progresses over the course of events.) Furthermore, the center includes means for transmitting the IDs of the entities a and b (or the IDs of the terminals used by the entities a and b) to the terminals of the entities a and b and to the processing units within associated systems, facilities, equipment, and authentication units. Since the IDs and the time associated with the entities a and b (or the terminals used by the entities a and b) are not transmitted over the Internet, the risk of the relation data being misappropriated can be reduced.

### Embodiment 17

As one example, the device and system implementing the present invention include means (step) for distributing and storing the relation data in storage units. Alternatively, the terminals of the entities a and b and the processing units within associated systems, facilities, equipment, and authentication units include means for storing the relation data in storage units.

In a typical embodiment, the center includes means (step) for instructing the terminals of the entities a and b to record a common, identical time at the moment the relation is established. The embodiment includes means (step) for assigning IDs to the entities a and b (or the terminals used by the entities a and b), and the processing units of the terminals of the entities a and b include means (step) for creating the relation data using the above time and the IDs. When the entities a and b subsequently establish a new relation, the processing units of the terminals include means (step) for transmitting the relation data to the center in response to an instruction from the center. The verification unit of the center or authentication unit includes means (step) for verifying the relation data. This configuration of the means (step) is designed to prevent the relation data from being transmitted over the Internet prior to verification. Since the relation data is transmitted over the Internet only at the time of verification, the risk of theft or forgery is reduced.

### Embodiment 18

A configuration including means (step) for storing the relation data in a distributed manner and means (step) for transmitting it to the verification unit at the time of verification has the same effect. Prior to transmission to the verification unit, the embodiment includes means for storing the relation data in a distributed manner across the storage units of the terminals used by the entities a and b, the storage unit of a dedicated terminal used in conjunction therewith, the storage unit of the center, the storage unit used in conjunction therewith, and other associated storage units. Some embodiments also include means (step) for transmitting the (distributed and stored) relation data from the storage units to the verification unit at the time of verification. With this configuration, the relation data is transmitted over the Internet only at the time of verification, thereby reducing the risk of theft.

### Embodiment 19

This embodiment includes means (step) for assigning IDs retrieval to the parts (segments) of the distributed relation data to facilitate their retrieval. The embodiment includes means (step) for retrieving the parts of the relation data using the IDs. The embodiment includes means (step) for retrieving the parts from the storage units and transmitting them to the verification unit.

### Embodiment 20

There are also embodiments in which neither the relation data nor the parts thereof are stored in the storage units of the terminals used by the entities a and b or in the storage unit of a dedicated terminal used in conjunction therewith. This embodiment includes means for storing IDs used to retrieve the relation data or parts thereof in the storage units of the terminals used by the entities a and b. The embodiment includes means for storing the relation data or parts thereof in a storage unit associated with the verification unit. Some embodiments include means (step) for retrieving the relation data or parts thereof from the storage unit and means (step) for transmitting it to the verification unit. This embodiment reduces the risk associated with transmitting the relation data over the Internet.

### Embodiment 21

There are various grounds upon which a determination is made, based on the verification performed by the verification unit's verification means, that the prescribed requirements are satisfied. Examples include: determining that the verification requirements are satisfied when the relation data retrieved from the storage units of the entities a and b, the center, the authentication unit, or the like and transmitted to the verification unit match; determining that the verification requirements are satisfied when data "aligns" (satisfies the requirements) rather than simply matching; and determining that the prescribed requirements are satisfied based on the transmitted relation data itself. The "requirements" in this context vary and are arbitrary, and they may involve alignment, superposition, or the creation of significance through mixing. In some examples, encryption is combined with the relation data to satisfy the requirements.

Systems implementing the present invention include means (step) for approving the continuation of the procedure for establishing the relation between the entities a and b when a determination is made, based on the verification performed by the verification unit's verification means, that the requirements are satisfied. There are embodiments in which the entities a and b are the center and the verification unit, the storage unit and the processing unit, a user and the dedicated terminal used by the user, etc. The embodiment includes means (step) for withholding approval for continuing the procedure to establish the relation between the entities a and b if verification determines that the requirements have not been satisfied. The embodiment includes means (step) for enabling the use of designated transmission/reception means upon approval of the procedure's continuation for establishing the relation. The transmission/reception means may be managed and operated by the center or by another telecommunications carrier.

### Embodiment 22

While there are examples in which the attribute data of the entities a and b are stored, saved, utilized, and managed by the center, it is preferred to use an evaluation system in conjunction. The procedures, methods, schemes, steps, means, functions, configurations, equipment, devices, handling processes, and the like described in the specification, as well as the various embodiments, may be implemented in any desired combination.

Typically, the center creates the relation data, but in one embodiment, the time recorded at any given point in the relation may be the coordinated universal time, or a time independently progressed by the center. It may also be a time common to all regions of the earth without regard for time zone differences, provided that the time progresses over the course of time. The IDs for the entities a and b associated with the recorded time need not originate from the user or the center but may be arbitrarily assigned by the creator, provided that it includes means for searching for and identify the user based on the relation data, and it is desirable to use a data format in which the relation data and the user are not directly linked. It is also desirable to include means for preventing third-party access to the means for searching for the user via the relation data or the means for searching for the relation data via the user's ID.

As examples of how the relation data is handled once created: in Example 1, it is stored in the storage unit of the creator's system; in Example 2, it is distributed to the parties involved in the relation; and in Example 3, it is transmitted over a network such as the Internet. Example 1 is generally used in conjunction with Examples 2 and 3. Example 1 primarily exemplifies the center (encompassing servers, sites, cloud systems, exchanges, etc.) as an example, and this example includes: means (step) for storing and saving, in the center system's storage unit 1, the relation data assigned to relations involving the center (with the storage units 1 and 2 provided for redundancy against troubles); means (step) for storing and saving, in the center system's storage unit 1, the relation data assigned to relations involving users (entities); means (step) for retrieving the relation data (data assigned to the relation between the user and the center) from storage units 1 and 2 using the user's ID and the center's ID when the user submits a relation request; means for passing the data to the verification unit that verifies the relation data; means for retrieving the relation data (assigned to the counterparty) from the storage unit using the counterparties' IDs (in examples involving multiple or an indefinite number of counterparties, they include means (step) for assigning an ID to a "group") when the procedure for establishing an approved relation involves counterparties other than the center (involving multiple or an indefinite number of counterparties); and means for approving the relation upon determining that established requirements have been satisfied.

In Example 2, in which the relation is between a user and the center, that is, there is no other counterparty, this example includes means (step) for retrieving the relation data of the applicant from the storage unit 2 using the user's ID, and, in conjunction with this, the center's processing unit includes means (step) for instructing the processing unit of the user's terminal to transmit the relation data.

Some embodiments include means (step) for instructing the user to perform a transmission. There are also examples including means (step) for the user to operate a terminal to retrieve the relation data from the terminal's storage unit and transmit it to the center. The processing unit of the user's terminal includes means (step) for, upon receiving the instruction, searching the storage unit for the relation data (which includes the IDs of both the user and the center) assigned to the most recent relation between the user and the center. The terminal's storage unit includes a storage unit B dedicated to the relation data, and includes means (step) for storing and saving data other than the relation data in a storage unit A. The embodiment includes means (step) for restricting the processing unit's access to the storage unit B, wherein a processing unit ii is positioned in front of the storage unit B, and the main processing unit includes means (step) for attaching a signature (created using arbitrary characters, symbols, numerical sequences, or the like), which has been transmitted from the center's processing unit, to the processing unit ii. The center's processing unit includes means (step) for transmitting the signature to the terminal's processing unit.

The storage unit includes means (step) for complying only with instructions to which the signature is attached. There is an example in which a dedicated terminal including an independent storage unit B is used, and this example includes means (step) for wired or wireless (including contactless schemes such as Bluetooth or others) communication with the terminal used by the user, and similar to the above, includes means (step) for executing the processing unit's instructions only when accompanied by the signature transmitted from the center's processing unit. Upon receiving an instruction accompanied by the signature, the processing units of the terminal and dedicated terminal include means (step) for retrieving the relevant relation data from the storage unit (the processing unit of the dedicated terminal includes means (step) for transmitting the relation data to the processing unit of the terminal via the transmission/reception unit), the processing unit of the terminal includes means (step) for transmitting the relation data to the processing unit of the center via the transmission/reception unit, the processing unit of the center includes: means (step) for transferring the data to a verification "site"; means (step) for verifying the relation data stored in the center's storage unit within the "site" against the relation data transmitted from the storage unit of the terminal or the dedicated terminal; and means for approving the relation between the center and the applicant when it is determined that prescribed requirements have been satisfied.

Example 2 includes: means (step) for retrieving the relation data from the storage unit 2 based on the IDs of the user and the other party when a user applies for a relation; and means (step) for transferring the relation data to the verification "site", and in conjunction with this, the processing unit of the center includes means (step) for instructing the processing unit of the other party's terminal to transmit the relation data. Depending on the example, it includes means (step) for instructing the other party to perform transmission. The other party operates the terminal to retrieve the relation data from the terminal's storage unit and transmit it to the center.

Upon receiving the instruction, the processing unit of the other party's terminal includes means (step) for retrieving, from the storage unit, the relation data (which includes the IDs of the applicant and the other party) assigned to the most recent relation between the applicant and the other party, but the processing unit of the other party's terminal includes means (step) for, upon receiving the instruction, searching the storage unit for the relation data (which includes the IDs of both the applicant and the other party) assigned to the most recent relation between the applicant and the other party. The terminal's storage unit includes a storage unit B dedicated to the relation data, and includes means (step) for storing and saving data other than the relation data in a storage unit A. The embodiment includes means (step) for restricting the processing unit's access to the storage unit B, wherein a processing unit ii is positioned in front of the storage unit B, and the main processing unit includes means (step) for attaching a signature (created using arbitrary characters, symbols, numerical sequences, or the like), which has been transmitted from the center's processing unit, to the processing unit ii. The center's processing unit includes means (step) for transmitting the signature to the terminal's processing unit. The storage unit includes means (step) for complying only with instructions accompanied by the sign.

There is an example in which a dedicated terminal including an independent storage unit B is used, and this example includes means (step) for wired or wireless (including contactless schemes such as Bluetooth or others) communication with the terminal, and similar to the above, includes means (step) for executing the processing unit's instructions only when accompanied by the signature transmitted from the center's processing unit. Upon receiving an instruction accompanied by the signature, the processing units of the terminal and dedicated terminal include means (step) for retrieving the relevant relation data from the storage unit. The processing unit of the dedicated terminal includes means (step) for transmitting the relation data to the processing unit of the terminal via the transmission/reception unit. The processing unit of the terminal includes means (step) for transmitting the relation data to the processing unit of the center via the transmission/reception unit, the processing unit of the center includes: means (step) for transferring the data to a verification "site"; means (step) for verifying the relation data stored in the center's storage unit within the "site" (verification unit) against the relation data transmitted from the storage unit of the terminal or the dedicated terminal; and means for approving the establishment of the relation between the applicant and the other party when it is determined that prescribed requirements have been satisfied.

### Embodiment 23

In Example 3 which involves systems characterized by networks such as distributed management, blockchain, and Web3, it is not possible to retrieve specific data in cases in which the location of that specific data is undefined, even though the data is verifiable by an unspecified number of parties, but the relation authentication system can be made to function by including means (step) for storing the relation data on the network and means (step) for retrieving the relation data. It is desirable to include: means (step) for assigning the relation data (at least the relation data from the initial setup) associated with the user's relation to the content of the final relation (the contents and results of the user's transaction); means (step) for retrieving the relation data on the network; and means (step) for verifying the content of the relation associated with the relation data.

There is an example of the relation executed by users X and Y without the involvement of the center, and in this example, it is desirable to include: means (step) for either X or Y to create the relation data, or means (step) for automatically creating the relation data using the application; means (step) for both to store and save the data in the storage units of their respective terminal systems; means (step) for automatically transmitting and receiving the relation data between them upon a request to establish the relation; means (step) for the terminal's processing unit to perform verification; and means (step) for establishing the relation when it is determined that the relation data satisfies prescribed requirements.

In this example, it is desirable to include: means (step) for storing and saving the content of the relation between X and Y and the relation data on the network via the "distributed management"; means (step) for retrieving the relation data as needed; means (step) for verifying the content of the relation associated with the relation data; and means (step) for restoring the asset status confirmed based on the content.

According to the relation authentication system, the center (including application operators, servers, etc.) includes means (step) for instructing the processing unit of a user's device (such as a PC or smartphone) to retrieve the relation data from its storage unit and transmit it to the center, and the device's processing unit includes means (step) for complying with such instructions without requiring user intervention upon receipt; therefore, there are examples that include means (step) for allowing a user who meets the necessary qualifications or conditions to request relations with all other eligible users in a single batch, and (step) for allowing a user who meets the qualifications or conditions to request relationships with other users in a batch.

### Embodiment 24

In the authentication device and system in a broad sense, when relationships (relationships formed through artificial actions or events) are established within society formed through artificial actions or events created by entities such as government agencies, corporations, or individuals (entities constituting society), the embodiment includes: means (step) for creating identifiers (arbitrary identifiable notations, including codes, symbols, audio, etc.) to be assigned to the entities that establish the relationships; means (step) for assigning the identifiers to the entities (via any desired form or scheme); means (step) for storing the identifiers in a storage unit which may be any available medium, including cloud storage; means (step) for verifying the stored identifiers when establishing a new relationship (whether initial or subsequent) between the entities; means (step) for determining, based on the verification, whether or not the identifiers satisfy prescribed requirements; and means (step) for approving the establishment of the new relationship upon a determination that the requirements are satisfied.

### Embodiment 25

In the authentication device and system in a broad sense, when the entities establish relationships within society, the embodiment includes: Step 1 of creating identifiers to be assigned to the entities that establish the relationships; Step 2 of assigning the identifiers to the entities; step 3 of storing the identifiers in a storage unit; Step 4 of verifying the stored identifiers when a new relationship is to be established between the entities; Step 5 of determining, based on the verification, whether or not the identifiers satisfy requirements; and Step 6 of approving the establishment of the new relationship upon determining that the requirements are satisfied.

### Embodiment 26

In the authentication system, the present invention is implemented primarily via the Internet lines. By way of example, the entity a accesses the center (Step 1). The center creates an ID for the entity a (Step 2). The center records the center's ID, the entity a's ID, and a timestamp indicating a specific time within the time period during which the relationship has been executed (Step 3). Data created from the records and the IDs is designated as verification data (relation data) for the entity a and the center (Step 4). The relation data is stored in the storage units of both the center and the entity a's terminal (Step 5). When the entity a subsequently requests to establish a relation with the center (Step 6; accessing the center), the center retrieves the relation data from its storage unit (Step 7). The relation data is retrieved from the storage unit of the entity a's terminal (Step 8). The system includes means for notifying the processing unit of the entity a's terminal with an instruction to transmit the data to the center's processing unit (or the verification unit of the authentication unit) (Step 9). The system includes means for the center's verification unit (or the verification unit of the authentication unit) to verify the relation data (Step 10). Upon determining through this verification that the relation data matches (or satisfies predetermined requirements) (Step 11), the center approves the continuation of the procedure for the entity a's new request (Step 12).

In one embodiment, when the entity a requests to establish a relation with the entity b via the center and submits an application to the center, the center retrieves data regarding the previous relation data between the entity a and entity b from the storage unit of the entity a's terminal (Step 13) and from the storage unit of the entity bs terminal (Step 14), and notifies the processing units of the terminals of the entities a and b with an instruction to transmit the data to the processing unit or verification unit of the center (or the processing unit or verification unit of the authentication unit) (Step 15). The verification unit of the center or the verification unit of the authentication unit verifies and evaluates the relation data (Step 16). On the basis of this verification, a determination is made as to whether the relation data matches (or satisfies prescribed requirements) (Step 16). When it is determined that the data matches (or satisfies the prescribed requirements), the processing unit of the center approves the continuation of the procedure for establishing a new relation between the entity a and entity b (Step 16).

### Embodiment 27

In the authentication system, when a given entity establishes a relationship with another entity, a list is provided to the entity that displays other entities and allows for the selection of a specific entity (Step 1). While the list may be stored in the storage unit of the terminal used by the entity, a preferred method involves displaying the list on the terminal's output display unit via means such as a fingerprint or PIN (Step 2; it is preferred to include means for keeping the list concealed otherwise). Alternatively, the list may be stored in the central server's storage unit and similarly revealed based on the entity's fingerprint or PIN (Step 2). Means is provided to keep the list concealed if the means for display is not executed (Step 3). Concealing the list prevents third parties from illicitly establishing relations (Step 4). When an attempt is made to establish a relation with a party with whom there is no prior relationship history, the system warns the entity (Step 5) and provides a confirmation means (Step 6), thereby preventing attempts to establish relationships without the entity's involvement (Step 7). In some cases, the list is stored in the storage unit of a dedicated terminal used in conjunction with the terminal used by the entities a and b. Also in this example, it is preferred to configure the system so that the list is revealed and concealed based on the entity's fingerprint or PIN.

### Embodiment 28

When the entity a establishes a relationship with the entity b (including examples involving multiple or numerous instances of the entities a and b) within the broad context of society, encompassing politics, economics, culture, entertainment, daily life, education, business, research, and the like, identifiers (such as an IDs) are created for the entities a and b to establish this relationship (Step 1). In cases in which no prior relationship history exists and it is the first instance, there may or may not be a pre-existing list of potential counterparties. If the entities (users) are managed by the center, it maintains the relevant lists. In instances in which no such list exists, such as when the entity b is a government agency, local municipality, corporation, or retail store anticipating requests from unspecified entities a, the center approves the establishment of the relation (Step 2). The center implementing the present invention acts in accordance with the determination made by the entity b (Step 3).

After the center approves the procedures and the transmission/reception required to establish the relation, the entities b and a confirm the conditions and content of the relation (Step 4). The relation between the entity a and entity b is validly established upon their mutual agreement and understanding (Step 5). In an example in which either entity a or b receives a request for a relation, the procedure for establishing the relation is approved only for a counterparty and content authorized by the user (Step 6), and the relationship is established once verification and agreement have taken place between the entity a and entity b (Step 7).

### Embodiment 29

The relationship between an entity and another entity is stored as a relationship history in the storage unit of the center (Step 11). The relationship history is provided to the terminal used by the entity (Step 12).

### Embodiment 30

The embodiment includes means for storing the relationship between an entity and another entity as a relationship history in the storage unit of the center, and means for providing the relationship history to the terminal used by the entity. Entity A establishes a relationship with the center, Entity B establishes a relationship with the center, and Entity B establishes a relationship with the entity A. Upon receiving a request to establish a relation from either or both of the entities A and B, the embodiment includes: means for verifying the identifiers of the center and Entity A and of the center and Entity B; means for verifying the validity of the identifiers; means for extracting the IDs of Entities A and B from the identifiers of the center and Entity A and the center and Entity B upon confirming validity; means for appending information such as the time associated with the relationship (examples may also include numerical values other than time, symbols, etc.); and means for creating an identifier assigned to the relationship between Entity A and Entity B.

While it is rational for the center to handle tasks such as relationship history management and identifier creation/management, the allocation of functions and means among the center, terminals, and the like is determined based on factors such as cost, risk, and security standards. The embodiment includes means (step) for arbitrarily updating the identifier assigned between an entity and the center, and means (step) for reflecting changes in attributes, such as the existence of the entity, its name, address, or credit status. One embodiment includes means (step) for the center to store and save the attribute data of the entities, and includes means (step) for managing it. The embodiment includes means (step) for executing the use (such as provision) of the entity attribute data based on the classification and characteristics of relationships, as well as the attributes and privileges of the entities. This example includes means (step) for classifying and managing the entity attribute data in accordance with conditions established by entity privileges or agreements between entities.

### Industrial Applicability

The system can be utilized as an authentication system in fields in which existing techniques were inadequate, such as confirming business partners or ensuring security in diverse IoT environments. It is particularly effective in preventing impersonation.

### Description of Reference Numerals

1 Entity a
2 Entity b
3 Center
4 Storage unit
5 Verification unit
6 Entity c
7 Start
8 Access center
9 Create relation data
10 Store data
11 Access center
12 Verify data

## Claims

1. A relation authentication device comprising:
means for creating, when a relationship arises between an entity A and an entity B, an identifier that distinguishes the relationship from other relationships; and
means for storing the identifier in a storage unit.

2. The relation authentication device according to claim 1, further comprising:
means for verifying the identifier stored in the storage unit;
means for determining, based on the verification, whether or not the identifier satisfies a predetermined requirement; and
means for approving continuation of a procedure to establish a relationship between the entities when it is determined that the requirement is satisfied.

3. A relation authentication system executing a method, the method comprising:
a step 1 of creating, when a relationship arises between an entity A and an entity B, an identifier that distinguishes the relationship from other relationships; and
a step 2 of storing the identifier in a storage unit.

4. The relation authentication system according to claim 3, the method further comprising:
a step 3 of verifying the identifier stored in the storage unit;
a step 4 of determining, based on the verification, whether or not the identifier satisfies a predetermined requirement; and
a step 5 of approving continuation of a procedure to establish a relationship between the entities when it is determined that the requirement is satisfied.
